# EUROPEAN PATENT APPLICATION

(11) **EP 3 121 776 A1**
(43) Date of publication of application: **25.01.2017**
(21) Application number: 16180122.0
(22) Date of filing: 19.07.2016
(51) Int. Cl.: G06Q 10/08, G06Q 50/28

(54) **SYSTEM AND METHOD FOR THE CONTROL AND MANAGEMENT OF POLYURETHANE FOAM BLOCKS**

(30) Priority: 20.07.2015 ES 201531063
(71) Applicant: IP Ingenieria del Poliuretano Flexible, S.L., 48170 Zamudio (Vizcaya) (ES)
(72) Inventor: VIÑAS GOMEZ, Angel, 48170 ZAMUDIO (Vizcaya) (ES); DECLERCK, Dominique Pierre Jacques, 48170 ZAMUDIO (Vizcaya) (ES)
(74) Representative: Ungria López, Javier

(57) **Abstract**

The object of the invention refers to a system for the control and management of polyurethane foam blocks (3) in a manufacturing plant with a foaming machine (1) and a cutting device, wherein the foaming machine (1) sends manufacturing data to a server (8), a printer (4) receives data from the server (8), the server (8) sends instructions to the electronic devices (5) of the movement to be performed to a certain block (3), the electronic devices (5) send information to the server (8) on a block (3), the RFID (6) gates send information to the server (8) on the movement detected in a block (3), so that the server (8) controls the situation of each block (3) in the plant in real time. A further object of the invention is the method to control and manage polyurethane foam blocks (3) used in the above-mentioned system.

## Description

### OBJECT OF THE INVENTION

The present invention refers to a system for the control and management of polyurethane foam blocks from their manufacture to their sale to customers, including intermediate stages of processing and storage which allows for increasing control at the plant, thus enhancing its resources and increasing the plant's performance and efficiency. The invention also discloses the method carried out by the system.

### TECHNICAL PROBLEM TO ADDRESS AND BACKGROUND OF THE INVENTION

In the current state of the art, the manufacture of polyurethane foam blocks comprises the following stages:
a) Foaming: It is carried out using a foaming machine. It is a continuous chemical process which results in a continuous block of polyurethane foam.
b) Cutting the block: The blocks are cut with the dimensions of the area where they are to be stored upon exiting the foaming machine.
c) Curing: Blocks undergo a drying stage where they acquire their final features. This process depends on a series of factors, such as the type of foam or the weather. It usually lasts about one or two days.
d) Storage: An area is made available to store the blocks which are to be subsequently processed, based on the clients' needs.
e) Processing: The blocks are processed in this area based on the final product required to be manufactured, and they may be cut, glued, packaged or undergo a combination of these processes.

These stages are clearly differentiated and physically separated from each other. Currently, the operations comprising the transport of the blocks during the different stages are carried out manually without any kind of automated management.

Likewise, the operators register the location of the blocks, in the storage area, manually.

Therefore, the planning of the manufacturing plant is conducted based on said manual data, subject to human mistakes, such that the system data may be incomplete or incorrect, there being no assurance thereof.

Another problem lies in the fact that the data input into the system may be incorrect or tampered on purpose with the intention of stealing foam blocks or making them disappear.

In addition, this manual control is not conducted in real time, since it depends on the operator, this leading to the oversight of blocks during their storage, which is in turn translated into a loss of the block's technical features or even its degradation, thus making it useless, with the related economic loss and reduction of effectiveness of the manufacturing plant.

The present invention describes a control and management system that prevents this kind of problems, optimizing the efficiency of a manufacturing plant of polyurethane foam blocks and the method carried out by the system.

### DESCRIPTION OF THE INVENTION

The present invention describes a control and management system of polyurethane foam blocks in a manufacturing plant and the method followed by said system.

The plant includes a foaming machine and a cutting device as the first steps for the manufacture of blocks.

In addition, the plant includes a printer for printing RFID labels, which are attached to each block for their identification, two RFID gates to control the movement of the blocks entering and leaving the storage areas, at least one electronic device and one server.

The foaming machine, the printer, the electronic devices and the RFID gates are connected to the server to send and receive data by means of a connection, which may be through a wireless network access point.

Thus, the server controls the location of every block in the plant in real time.

The system information in the server is located in a database accessed through different permission levels. Thus, an operator needs to be previously registered in order to send information from an electronic device to the server. Apart from permissions at a plant-operator level, there is also a an administration-level permission and another permission at external-user level to access information on the blocks in stock and to make purchases and reservations.

One of the server options is the possibility of issuing warnings in the event of detecting that one block has exceeded the defined length of stay in an area of the plant.

The system may also incorporate a dimensional station to control the weight and dimensions of a newly manufactured block. This station would also be connected to the server, to which the data related to the measurements carried out would be sent.

The electronic devices may be notebooks, tablets, mobile phones or similar devices.

The procedure to be followed by the system comprises the following stages:
a) issuing manufacturing data related to one block from the foaming machine to the server;
b) issuing data related to the manufactured block from the server to the RFID printer;
c) placing the RFID label in the manufactured block;
d) having a registered user move the manufactured block to the curing area;
e) issuing instructions from the server to move a block from the curing area to the storage area;
f) having a registered operator move a block from the curing area to the storage area through an RFID gate, said RFID gate issuing to the server the entrance movement record of the block in the storage area;
g) issuing to the server the block location record in the storage area by means of an electronic device handled by a registered operator;
h) issuing information on an order from the server;
i) having a registered operator move a block from the storage area to the processing area going through an RFID gate, said RFID gate issuing the exit movement record of the block from the storage area to the server;
j) having a registered operator conduct cutting operations on the block in the processing area;
k) having a registered operator conduct packaging operations of the cut block in the processing area.

In addition, after stage d), the following stage may comprise:
l) having a registered operator issue to the server the block location record in the curing area by means of an electronic device.

During any of the stages of the method, a registered operator may send information to the server as to defects that may be detected in a block while they are being manipulated.

### BRIEF DESCRIPTION OF THE FIGURES

To complete the invention being described, and in order to help understand the characteristics of the invention, according to a preferred embodiment thereof, it is accompanied by a set of drawings in which the figures described below have been represented, for purely illustrative purposes and should not be construed as limiting:

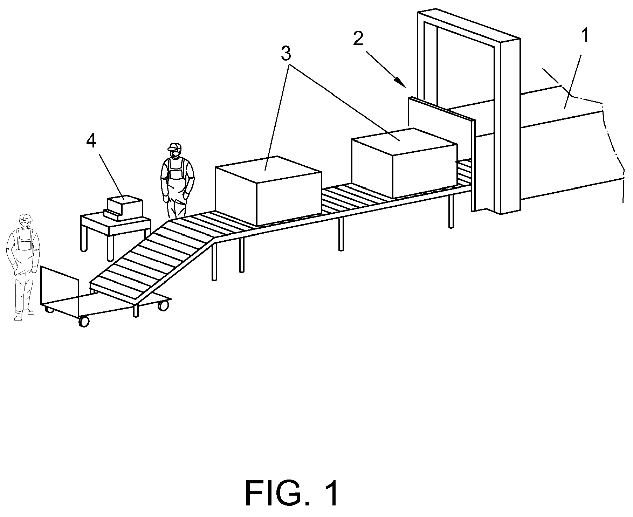

- Figure 1 shows a perspective view of the manufacturing area.

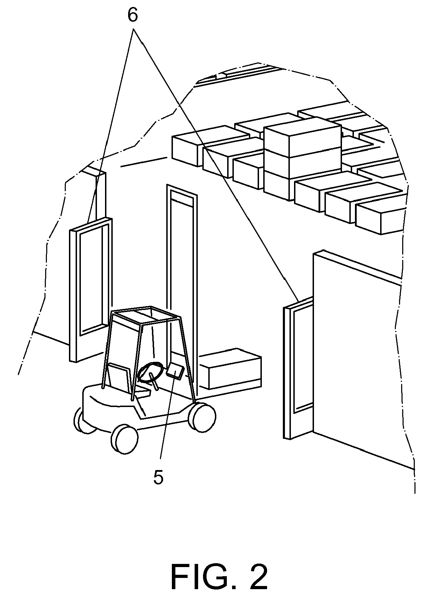

- Figure 2 shows a perspective view of an operator transporting a block to the storage area.

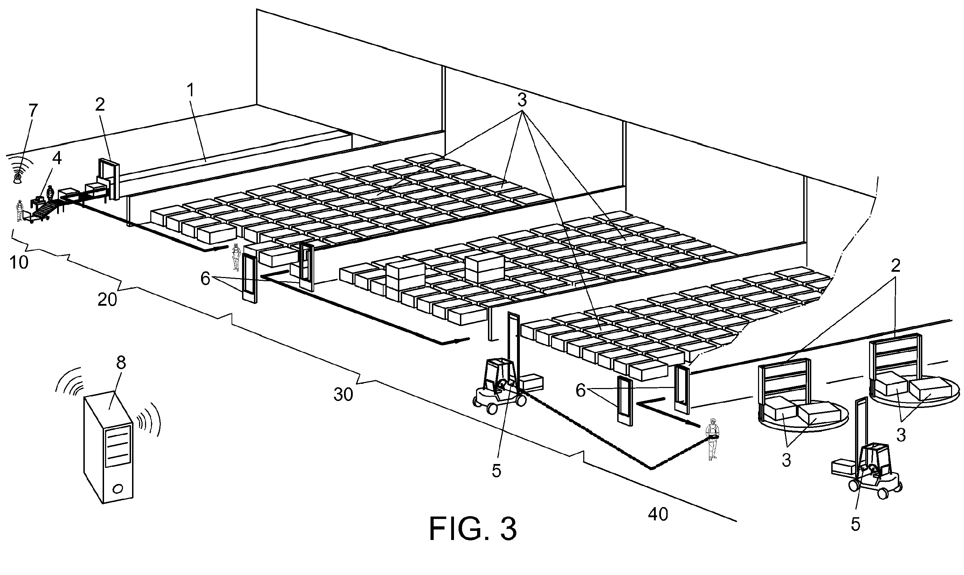

- Figure 3 shows a perspective view of all the areas in the plant.
Provided below is a list of the references used in the figures:
1. Foaming machine.
2. Cutting device.
3. Polyurethane foam block.
4. RFID-label printer.
5. Electronic device.
6. RFID gate.
7. Wireless network access point.
8. Server.
10. Manufacturing area.
20. Curing area.
30. Storage area.
40. Processing area.

### DESCRIPTION OF A PREFERRED EMBODIMENT OF THE INVENTION

The present invention describes a control and management system of polyurethane foam blocks (3) in a manufacturing plant, the configuration and design of which allow to increase plant control, optimize its resources and increase its performance and efficiency. The method carried out by the system is also described.

To conduct the control and management of the blocks (3), the system uses, on the one hand, control elements by means of radio frequency, such as RFID labels and several RFID gates (6) to read these labels and, on the other hand, electronic devices (5) connected to a server (8) by means of wireless technology through a wireless network access point (7).

In addition, the different areas of the plant involved in processing a block (3), from the manufacturing order until the receipt of the order, are separate and independent. Therefore, the different areas are implemented: a manufacturing area (10), a curing area (20), a storage area (30) and a processing area (40).

The operators from the different areas (10, 20, 30, 40) have access to the server (8), prior registration, by means of electronic devices (5), such as notebooks, tablets, mobile phones or similar, so that not only can they receive instructions, but also input data in the server (8). There are different levels to access the server (8), such that each user has access to specific parts of the server (8).

The process followed by a foam block (3) in the plant is that described below.

The process begins in the manufacturing area (10) with the receipt of the manufacturing order. Thus, a registered operator begins the manufacture of a block (3) in a foaming machine (1). Upon leaving the machine (1), there is a cutting device (2) which proceeds to cut the block with the dimensions indicated in the received manufacturing order.

Afterwards, the block (3) moves to the dimensional station, where the manufactured block (3) is weighed and a dimensional reading is carried out, for control purposes. The dimensional station is also connected to the server (8), such that the data from the dimensional reading may be sent.

Once generated and verified, the block (3) is added in the server (8). The record may be performed in two ways. The first is by generating a machine signal confirming the production of the requested block (3). The second is by generating a signal using a presence detector at the exit of the cutting device (2), which confirms the performance of the requested order.

The signal generated is sent to the server (8) which, upon detecting that a block (3) has been produced, sends information to an RFID printer (4) to print an RFID label that includes an identification code of the block (3). The label is placed in the manufactured block (3), thus identifying each block (3).

Therefore, the data from the foaming machine (1) as to material, dimensions of the block (3) to be manufactured and the manufacturing date, along with the actual data measured in the dimensional station, the code of the block (3) generated by the RFID printer (4) are sent to the server (8) to become part of the database that contains the information related to the plant's activity.

In this way, the data registered in the server (8) upon labelling a block (3) are the following:
- block code,
- the features of the material such as, for example, density,
- theoretical weight and dimensions of the block,
- actual weight and dimensions of the block,
- manufacturing date and time of the block.

The recently manufactured block (3) is transported by an operator, who, as mentioned, must be registered in the server (8), to the curing area (20), where it will remain during a pre-determined period based on its features before being sent to the storage area (30). The operator, by means of an electronic device (5), records the movement of the block (3), also recording the date and time. Optionally, the location of the block (3) in the curing area (20) is also recorded, thus inputting these data in the server (8).

As indicated, after a pre-determined period, the server issues an order to transport the block (3) from the curing area (20) to the storage area (30).

A registered operator is in charge of transporting the block from the curing area (20) to the storage area (30).

The storage area (30) incorporates an RFID reading gate (6) both for the entrance and the exit, such that the RFID gate (6) control both the movements of entrance coming from the curing area (20) and the movements of exit towards the processing area (40). RFID gates (6) are connected to the server (8) such that the movements detected are recorded in the server (8).

As in the curing area (20), the operator, by means of an electronic device (5), records the location of the block (3) in the storage area (30), incorporating these data in the server (8).

When a block (3) needs to be moved as a result of the receipt of a sales order, the data are input in the server (8). An operator receives the data referred to the block (3) to be moved, its location and the operations to be performed in the processing area (40), especially as to dimensions and packaging.

Once the operator has located the block (3) in question, the operator takes it from the storage area (30) to the processing area (40), going through the RFID gate (6) to exit the storage area (30), which detects the movement and records it in the server (8).

In the processing area (40), the block (3) is cut with the appropriate measures and is packaged according to the received order. A registered operator inputs these operations in an electronic device (5), such that they are also recorded in the server (8).

At any point of the block (3) manipulation, the operator inspects the block (3) to detect any defect or quality-related detail that may have passed unnoticed. Should any anomaly be detected, it is input in the electronic device (5) to be recorded in the server (8).

It should be noted that any movement carried out by the server (8), be it inputting or outputting data, also includes the time in which it is carried out.

Therefore, the data incorporated in the server (8) related to every block (3) in any area (10, 20, 30, 40) of the plant are as follows:
- Age of the block (3).
- Position of the block (3).
- Length of stay in each area (10, 20, 30, 40).
- Operators who have manipulated the block (3) in each operation.
- Manipulation times between areas (10, 20, 30, 40).
- Status of the block (3) by means of parameters controlling the quality of the block (3), as to dirt or cracks, among others.

With these data, which is updated in real time, the entire plant is controlled and managed, delivering an ideal performance.

In server (8) it is known, at all times, where each block (3) is located, the status thereof or the storage period. This allows for the selection of the most favourable block (3) at all times, thus allowing, for example, to make older blocks (3) exit first..

In addition, the server (8) has a warning system to warn if a block (3) exceeds a pre-determined time in an area (10, 20, 30, 40) in particular.

In addition, based on the information recorded in the server (8), data are obtained on the efficiency of the plant, such as the following:
- movements per hour of each block (3),
- material volume moved per hour,
- efficiency of the workers as to the movements carried out,
- control or care in the manipulation of the operators when moving the blocks (3) so as to avoid damages,
- detecting defects by operators.

The server (8) information is located in a cloud-based database, accessible not only from any location inside the plant, but also outside. To have access to the database, an access permission is needed, which has different levels. Thus, depending on the permission granted, information may be accessed with restrictions.

There are three permission levels:
- Foaming operator: Has access to the data for the manufacture of the block, that is, theoretical dimensions and the density of the block. Such that if the actual dimensions of the manufactured block differ from the theoretical dimensions, the foaming machine may be adjusted. It needs to be taken into account that the essential parameter of a foam block is its density.
- Manipulation operator: Has access to the positions of the block, the orders to be carried out on the block as to displacements, and the quality status of the block; this parameter may be updated by the operator should any anomaly be detected in the block.
- Planning operator: Has access to all the plant's information, so that optimal management of the blocks may be performed. Manages the movement of the blocks from the curing area to the storage area at pre-determined times and from the storage area to the processing area, taking into account the age of the blocks.

There are also two possible additional accesses:
- Administrator: Valid for the plant manager. Has access to efficiency-related data as to the displacement of blocks, conducted movements, exit of blocks and manufacture of new blocks, workers' efficiency as to conducted movements, issued orders, etc.
- Web sales: to provide the client with access to the information of the blocks (density, colour, dimensions, age) stored for a purchase or reservation.

The advantages provided by the system of the invention are the following:
- Controlling the plant's stock in real time,
- providing multi-platform access to the information,
- issuing automatic work orders,
- providing bi-directional information between planning and block manipulation area,
- creating warnings to assign priority to older blocks (3) or to identify lost blocks (3),
- preparing automatic reports on the efficiency of the system.

It is noteworthy that the present invention is not limited by the embodiment disclosed herein. Other embodiments can be made by those skilled in the art in light of this description. In consequence, the scope of the invention is defined by the following claims.

## Claims

1. A system for the control and management of polyurethane foam blocks (3) in a manufacturing plant that incorporates a foaming machine and a cutting device **characterized in that** it comprises:
- a server (8),
- an RFID-label printer (4),
- at least one electronic device (5),
- an RFID label located in each of the blocks (3),
- at least two RFID gates (6) to control the entrance and exit movement of blocks (3) in a storage area (30),
where,
- the foaming machine (1) is configured to send manufacturing data to the server (8),
- the printer (4) is configured to receive data from the server (8),
- the server (8) is configured to send instructions to the electronic devices (5) as to the movement to be performed by a specific block (3),
- the electronic devices (5) are configured to send information to the server (8) on the position and the moment in which the block has been located in a determined area and its status,
- the RFID gates (6) are configured to send information to the server (8) as to the movement detected in a block (3) going through an RFID gate (6),
such that the server (8) controls the situation of every block (3) in the plant in real time.

2. A system for the control and management of polyurethane foam blocks (3), according to claim 1, **characterized in that** the data exchange with the server (8) is carried out through a wireless network point of access (7).

3. A system for the control and management of polyurethane foam blocks (3), according to claims 1 or 2, **characterized in that** the delivery of information from an electronic device (5) is performed by a registered operator.

4. A system for the control and management of polyurethane foam blocks (3), according to claim 3, **characterized in that** it comprises a dimensional station configured to send data to the server (8) as to the weight and dimensions of a block (3).

5. A system for the control and management of polyurethane foam blocks (3), according to any of the preceding claims, **characterized in that** the electronic device (5) is selected between a notebook, a tablet and a mobile phone.

6. A system for the control and management of polyurethane foam blocks (3), according to any of the preceding claims, **characterized in that** the server is configured to send warnings in the event of a block (3) exceeding its defined length of stay in an area (10, 20, 30, 40) of the plant.

7. A system for the control and management of polyurethane foam blocks (3), according to any of the preceding claims, **characterized in that** the system information in the server (8) is located in a database accessible with different permission levels.

8. A system for the control and management of polyurethane foam blocks (3), according to claim 7, **characterized in that** it comprises an external user permission level to access the information on the blocks (3) located in the storage area (30) and to have access to purchases and reservations.

9. A method for the control and management of polyurethane foam blocks (3) according to the preceding claims, **characterized in that** it comprises the following stages:
a) issuing manufacturing data related to one block (3) from the foaming machine (1) to the server (8);
b) issuing data related to the manufactured block (3) from the server to the RFID printer (4);
c) placing the RFID label in the manufactured block (3);
d) having a registered user move the manufactured block (3) to the curing area (20);
e) issuing instructions from the server (8) to move a block (3) from the curing area (20) to the storage area (30);
f) having a registered operator move a block (3) form the curing area (20) to the storage area (30) going through an RFID gate (6), said RFID gate (6) issuing to the server (8) the entrance movement record of the block (3) in the storage area (30);
g) having a registered operator issue to the server (8) the record of the location of the block (3) in the storage area (30) by means of an electronic device (5);
h) issuing from the server (8) information on an order;
i) having a registered operator move a block (3) from the storage area (30) to the processing area (40) going through an RFID gate (6), said RFID gate (6) issuing to the server (8) the entrance movement record of the block (3) in the storage area (30);
j) having a registered operator conduct cutting operations on the block (3) in the processing area (40);
k) having a registered operator conduct packaging operations of the cut block (3) in the processing area (40).

10. A method for the control and management of polyurethane foam blocks (3) according to claim 9, **characterized in that**, after stage d), it comprises the following stage:
l) issuing to the server (8) the record of the location of the block (3) in the curing area (20) by means of an electronic device (5) by a registered operator.

11. A method for the control and management of polyurethane foam blocks (3), according to any of the claims 9 or 10, **characterized in that**, during any stage of the method, a registered operator sends information to the server (8) regarding the defects found in a block (3).

12. A method for the control and management of polyurethane foam blocks (3), according to any of the claims 9 though 11, **characterized in that** the server issues a warning sign upon detecting that a block (3) has exceeded a length of stay in an area (10, 20, 30, 40) of the plant.
